# FASCICULE DE BREVET EUROPEEN

(11) **EP 0 504 057 B1**
(45) Date de publication et mention de la délivrance du brevet: **07.06.1995**
(21) Numéro de dépôt: 92400654.7
(22) Date de dépôt: 12.03.1992
(51) Int. Cl.: A23L 1/277

(54) **Procédé de blanchiment de matières végétales en deux étapes**
Zweistufiges Bleichverfahren für pflanzliches Material
Two-stage process for bleaching plant matter

(30) Priorité: 15.03.1991 FR 9103176
(43) Date de publication de la demande: 16.09.1992
(73) Titulaire: ELF ATOCHEM S.A., 92800 Puteaux (FR)
(72) Inventeur: Devic, Michel, F-69110 Ste Foy les Lyon (FR)
(74) Mandataire: Kaplan, Jean-Pierre

(56) Documents cités:
- EP-A- 0 402 280
- WO-A-84/02366
- WORLD PATENTS INDEX Section Ch, Week 20, 1980 Derwent Publications Ltd.,London, GB; Class F, AN 80-35388C(20)
- WORLD PATENTS INDEX Section Ch, Week 30, 1976 Derwent Publications Ltd.,London, GB; Class D, AN 76-56985X (30)

## Description

La présente invention concerne un procédé de fabrication de matières végétales à usage alimentaire, blanchies à l'aide de peroxyde d'hydrogène en solution aqueuse alcaline.

Des matières végétales que l'on peut traiter par le procédé selon l'invention comprennent les sons d'oléagineux comme le tournesol, les sons de céréales comme le blé, le maïs, l'avoine, l'orge ou les grains entiers de céréales ; on peut aussi utiliser des pulpes provenant de différents produits comme la betterave sucrière ou non, les agrumes par exemple le citron, les fruits tels que les poires, pêches, pommes, abricots, les oléagineux comme le tournesol, le soja, les céréales, pulpes qui résultent de l'extraction de la partie normalement valorisable de ces produits, c'est-à-dire le sucre, le jus de fruit, la pectine, l'huile, l'amidon.

Habituellement, ces matières végétales sont traitées par des solutions aqueuses alcalines contenant du peroxyde d'hydrogène pour les "délignifier" et les blanchir.

Ces matières végétales blanchies comprennent une teneur élevée en fibres végétales et sont utiles, notamment, pour fabriquer des produits alimentaires et, en particulier, des produits alimentaires à basse teneur en calories, par exemple des farines diététiques.

Cependant, les produits alimentaires, obtenus à partir de ces fibres, présentent une coloration trop foncée pour permettre leur utilisation comme substituts aux farines.

Pour remédier à cet inconvénient, différents procédés ont été proposés. Ainsi, le brevet français 2.382.866 de BAYER a décrit le blanchiment d'une suspension de pulpe de betterave par traitement par une solution alcaline de peroxyde d'hydrogène à pH de 9,5 à 10, suivie de filtration, lavage et séchage. Le brevet Us 4.649.113 de GOULD a décrit le traitement de fibres végétales alimentaires en suspension à température ambiante, par une solution alcaline de peroxyde d'hydrogène dont le pH est maintenu entre 11,2 et 11,8. Ce traitement à température ambiante et à pH contrôlé permet une "délignification" efficace. Le traitement de matières végétales, tel que décrit dans ces documents, uniquement par une solution alcaline de peroxyde d'hydrogène ne permettent pas d'obtenir des produits de blancheur satisfaisante par suite de la décomposition rapide du peroxyde au contact des impuretés contenues dans les fibres végétales.

Pour obtenir des matières végétales présentant un degré de blancheur plus élevé, il a été proposé au brevet français 2.647.641 de soumettre la matière végétale, avant le traitement de blanchiment, à un prétraitement acide suivi d'un lavage.

Il a été aussi proposé dans le document EP-A-337.653 de prétraiter la matière végétale par une solution alcaline, puis éventuellement de la laver, avant d'ajouter le peroxyde d'hydrogène. Le prétraitement a lieu en l'absence de peroxyde d'hydrogène et à un pH compris entre 10 et 13 et une température supérieure à 25°C. Pour la phase de blanchiment, la matière végétale est maintenue au contact de la solution de peroxyde, à un pH de 9,5 à 11,0, à une température supérieure à 25°C, pendant un temps suffisant pour obtenir des fibres blanchies. La matière blanchie est neutralisée par un acide avant séchage.

Ce procédé permet de transformer des matières végétales lignocellulosiques en produits fibreux cellulosiques utiles, notamment, comme matières à faible teneur en calories appropriées à l'ingestion par les humains.

Le prétraitement alcalin permet d'éliminer un grand nombre d'impuretés, mais entraîne un jaunissement de la matière lignocellulosique de la fibre végétale.

Enfin dans le domaine technique du blanchiment de la pâte à papier par le peroxyde d'hydrogène, il a été proposé dans le document JP-A-55045806 de mélanger un composé de magnésium et un agent de chélation à la pâte et d'effectuer le blanchiment au peroxyde d'hydrogène à un pH initial inférieur à 10,3 puis d'ajuster le pH à une valeur inférieure à 6. Ce procédé donne le même degré de blancheur que les procédés utilisant le silicate de sodium.

La présente invention a donc pour objet un procédé permettant d'obtenir des matières utiles pour la fabrication de produits alimentaires, en particulier des produits à basse teneur en calories, par exemple, des farines diététiques, qui présentent un plus grand degré de blancheur.

Le procédé selon l'invention, pour le blanchiment de matières végétales, comprend un prétraitement alcalin et un traitement par une solution aqueuse alcaline contenant du peroxyde d'hydrogène. Le procédé est caractérisé en ce que :
**(1)** on traite la matière végétale par une solution alcaline contenant du peroxyde d'hydrogène, utilisé en une quantité comprise entre 0,1 et 5 % en poids par rapport au poids de la matière végétale à l'état sec, l'agent alcalin étant utilisé en quantité suffisante pour que le pH de la suspension obtenue en fin de traitement soit inférieur ou égal à 9,
**(2)** on filtre et on lave avec de l'eau la suspension obtenue à l'étape (1) avec une efficacité au moins égale à 50 % ; la matière végétale obtenue est mise en suspension dans l'eau jusqu'à l'obtention d'une consistance de 2 à 40 %_{,}
**(3)** on traite à une température comprise entre 40 et 100°C pendant une durée de 15 mn à 5 heures, la matière obtenue à l'étape (2) par une solution alcaline de peroxyde d'hydrogène utilisé en une quantité de 1 à 15 % en poids par rapport au poids de la matière végétale à l'état sec, l'agent alcalin étant utilisé en quantité suffisante pour que le pH de la suspension obtenue à la fin de cette étape, soit inférieur ou égal à 8,5 ;
**(4)** on filtre et on lave avec de l'eau la matière blanchie obtenue à l'étape (3).

La première étape du procédé de blanchiment selon l'invention est le prétraitement alcalin en présence de peroxyde d'hydrogène. Cette étape correspond à une première étape de blanchiment.

Les matières végétales que l'on peut traiter selon l'invention, peuvent être celles mentionnées précédemment, c'est-à-dire, des grains entiers de céréales, des sons d'oléagineux, de céréales ou bien des pulpes obtenues après extraction de la partie valorisable de matières comme la betterave, les agrumes, les fruits, les oléagineux, les céréales. De préférence, les matières végétales sont broyées grossièrement pour favoriser les traitements ultérieurs.

Lors de cette première étape, la matière végétale est utilisée sous forme de suspension aqueuse dont la consistance doit être faible pour permettre une bonne agitation de la suspension. Elle est , de préférence, comprise entre 2 et 40 % et, plus particulièrement entre 10 et 15 %. La consistance correspond au pourcentage en poids de la matière végétale à l'état sec dans la suspension. En réalité, la consistance n'est pas critique pour la mise en oeuvre de l'invention. Elle dépend du pouvoir de rétention d'eau de la matière végétale qui correspond au poids d'eau absorbée par rapport au poids de la matière mouillée égouttée et qui est exprimé en pourcentage.

La matière végétale est mise en suspension dans de l'eau chauffée, par exemple, à 80°-90°C et est soumise pendant une durée courte à une violente agitation pour mettre en suspension les impuretés insolubles. Eventuellement, la matière végétale est mise en suspension directement dans la solution aqueuse alcaline contenant le peroxyde d'hydrogène utilisée pour le prétraitement.

Comme agent alcalin, on peut utiliser tout produit approprié et, notamment, la soude, la potasse, le carbonate de sodium ou de potassium, l'oxyde de calcium CaO, l'oxyde de magnésium MgO. On préfère utiliser la soude.

L'agent alcalin est ajouté en quantité telle que le pH, à la fin du prétraitement est inférieur ou égal à 9, et de préférence compris entre 7 et 8. Par exemple, lorsque l'agent alcalin est la soude, on utilise généralement une quantité inférieure à 10 % en poids par rapport à la matière végétale à l'état sec, et de préférence, en quantité inférieure à 3 % en poids.

La température à laquelle a lieu le prétraitement dépend de la nature de la matière végétale à traiter. Elle est généralement comprise entre 20 et 100°C et, de préférence entre 60° et 90°C.

La durée du prétraitement doit être suffisante pour permettre l'imprégnation complète de la matière végétale par la solution de peroxyde d'hydrogène. Cette durée dépend de la température, de la nature de la matière végétale et de l'efficacité de l'agitation de la suspension aqueuse. Généralement, la durée du prétraitement est inférieure à 2 h. Lorsque le prétraitement a lieu à environ 90°C, la durée est, de préférence, de 15 à 30 mn.

Selon la présente invention, la solution alcaline, utilisée pour le prétraitement, comprend du peroxyde d'hydrogène, utilisé en quantité comprise entre 0,1 et 5 % en poids, par rapport au poids de la matière végétale à l'état sec à traiter et, de préférence entre 1 et 3 %. Le peroxyde d'hydrogène peut éventuellement provenir du recyclage du filtrat obtenu par filtration de la matière après blanchiment.

La solution alcaline utilisée pour le prétraitement peut contenir, en outre, un ou des agent(s) stabilisant(s) du peroxyde d'hydrogène et/ou des agent(s) complexant(s) ou séquestrant des ions métalliques, agents qui sont compatibles avec l'utilisation alimentaire envisagée. Comme agent stabilisant, on peut utiliser du silicate de sodium, de la magnésie, des sels solubles du magnésium, comme le chlorure ou le sulfate ; comme agent complexant, sont utilisables des polyphosphates de sodium tels que le tripolyphosphate de sodium, des dérivés des acides pyrophosphoriques comme le tétrapyrophosphate de sodium. Ces composés sont utilisés en quantité inférieure à 1 % en poids par rapport à la matière végétale à l'état sec.

Il est possible d'ajouter, pendant le prétraitement, un agent émulsifiant ou détergent compatible avec une utilisation alimentaire, pour améliorer l'élimination des impuretés colorées pendant la filtration. Ces composés sont utilisés en quantité inférieure à 1 % en poids par rapport au poids de la matière végétale, à l'état sec.

La deuxième étape du procédé selon l'invention est la filtration et le lavage de la suspension de matière végétale obtenue après le prétraitement.

La filtration, qui a lieu dès que le prétraitement est terminé, est réalisée, de préférence, sur un filtre ou sur une presse à vis, dont l'élément filtrant est constitué par une toile métallique inoxydable de maille comprise entre 50 »m et 1 mm selon la granulométrie de la matière utilisée. Pendant la filtration, il est souhaitable d'agiter pour maintenir les impuretés en suspension et décolmater l'élément filtrant et la température est celle de la suspension à la fin du prétraitement.

Après la filtration, la matière végétale est lavée avec de l'eau chaude ou froide, de préférence avec de l'eau à 60°C jusqu'à l'obtention d'un filtrat limpide et incolore.

L'efficacité du lavage doit être supérieure à 50 %. Par efficacité, on entend le poids de phase aqueuse éliminée par lavage par rapport au poids de la phase aqueuse avant lavage. L'efficacité est exprimée en pourcentage. De préférence, le lavage est réalisé avec une efficacité supérieure ou égale à 90 %.

La troisième étape du procédé selon l'invention est une phase de blanchiment. La matière végétale obtenue après le lavage de l'étape (2) est mise en suspension dans l'eau jusqu'à l'obtention de la consistance désirée, qui peut varier de 2 à 40 % suivant la nature de la matière. Elle est, de préférence de 10 à 20 %. La consistance est choisie en fonction du type d'appareillage utilisé pour l'imprégnation de la matière par la solution de peroxyde d'hydrogène.

On utilise le peroxyde d'hydrogène à raison de 1 à 15 % en poids par rapport au poids de matière végétale à l'état sec et, de préférence de 5 à 10 %.

Comme agent alcalin, on peut utiliser ceux mentionnés précédemment et, de préférence, la soude. L'agent alcalin est utilisé en quantité nécessaire pour que le pH, à la fin du blanchiment soit inférieur ou égal à 8,5 et de préférence voisin de 7. Lorsque l'agent alcalin est la soude, il est utilisé en quantité comprise entre 0,2 et 5 % en fonction de la nature de la matière végétale et de préférence, entre 1 et 2 % en poids par rapport au poids de matière végétale à l'état sec.

La solution alcaline peut contenir éventuellement un agent stabilisant du peroxyde d'hydrogène, tel que ceux mentionnés précédemment. Lorsque le magnésium, sous forme de magnésie ou de sel soluble (chlorure, sulfate), est utilisé comme agent stabilisant, sa quantité est inférieure ou égale à 1 % en poids (par rapport au poids de la matière végétale sèche). Lorsque l'agent stabilisant est du silicate de sodium, sous forme de solution aqueuse de densité égale à 1,33, on l'utilise à raison de quantité inférieure ou égale à 5 % en poids.

La solution alcaline peut aussi contenir éventuellement un ou des agents complexants ou séquestrants des ions métalliques. Ces composés ainsi que leur quantité sont ceux indiqués précédemment pour la solution alcaline du prétraitement.

L'étape de blanchiment a lieu à une température comprise entre 40 et 100°C et de préférence entre 60 et 90°C.

Généralement, avant d'ajouter le peroxyde d'hydrogène, la matière végétale est chauffée jusqu'à la température à laquelle a lieu le blanchiment. La durée de blanchiment varie en fonction de la nature de la matière végétale et de la quantité de peroxyde d'hydrogène ajoutée. Cette durée est de 15 mn à 5 h et de préférence de 1 h à 2 h à 80°C.

La quatrième étape du procédé selon l'invention consiste en la filtration et le lavage de la matière végétale blanchie.

A la fin du blanchiment, le peroxyde d'hydrogène résiduel peut être éliminé par filtration et lavage avec de l'eau et/ou par traitement de la matière végétale par une solution d'une enzyme, comme la catalase, qui décompose le peroxyde.

Lorsque la filtration et le lavage sont réalisés, les jus de filtration et les premiers jus de lavage, qui contiennent du peroxyde d'hydrogène (environ 10 à 60 %) en poids de la quantité initiale de peroxyde), peuvent être récupérés et recyclés pour servir à l'étape de prétraitement, après purification, si cela est nécessaire, par des moyens usuels (filtration, décantation, centrifugation, etc...). Ce recyclage des filtrats a l'avantage de réduire le coût de production et aussi, de réduire les effluents.

La matière végétale ainsi blanchie peut être séchée selon des procédés utilisés dans l'industrie alimentaire et, éventuellement, broyée pour obtenir une farine appropriée à une utilisation alimentaire.

Le prétraitement alcalin, sans peroxyde d'hydrogène, permet d'éliminer un grand nombre d'impuretés. Le procédé selon l'invention a l'avantage d'augmenter l'efficacité de ce prétraitement en empêchant le jaunissement de la matière lignocellulosique qui résulte de ce prétraitement alcalin et, ceci en utilisant de faibles quantités de peroxyde d'hydrogène. En outre, le procédé selon l'invention permet d'obtenir la matière blanchie à un pH neutre ou légèrement acide, ce qui évite l'étape de neutralisation par un acide, étape généralement utilisée pour la fabrication de matière végétale blanchie.

Le procédé selon l'invention consiste principalement en deux étapes de blanchiment séparées par une étape de filtration et de lavage et pendant lesquelles le pH est contrôlé. On a pu noter d'une manière surprenante et comme le montrent les exemples, qu'en utilisant une même quantité totale de peroxyde d'hydrogène, il est possible d'obtenir un produit présentant un degré de blancheur plus élevé lorsque le blanchiment se fait deux étapes qu'en une seule étape.

Les exemples suivants, illustrent l'invention.

Dans tous les exemples, les quantités des réactifs chimiques sont exprimées en pourcentage en poids par rapport à la matière végétale à l'état sec.

Le degré de blancheur, avant ou après blanchiment est mesuré à l'aide d'un réflectomètre (à 457 nm) selon la norme ISO de l'industrie papetière et est exprimé en degré ISO.

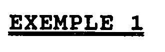

On met 168 g de son de tournesol broyé (150 g sec) en suspension dans 582 g de solution aqueuse, chauffée à 90°C, pour obtenir une consistance de 20 %. La solution contient en outre, 2 % de peroxyde d'hydrogène et 1 % de NaOH. Après 15 mn d'agitation à 90°C, le pH est de 7,5. On filtre et on lave avec 1 l d'eau avec une efficacité d'environ 90 %.

Le précipité humide est mis en suspension dans 560 g d'eau pour atteindre une consistance de 15 % et est chauffé à 80°C. On ajoute 5 % de H₂0₂ et 1 % de NaOH. On agite la suspension pendant 1 h à 85°C. A la fin du traitement, le pH est de 6,4. On filtre et on lave avec de l'eau. On recueille 725 g de filtrat à pH égal à 6,4, contenant 2,7 96 de H₂0₂. Le précipité est lavé plusieurs fois avec de l'eau, puis séché à 70°C.

On obtient 135 g de son de tournesol sec ayant une blancheur de 52°ISO (blancheur initiale de 32,8° ISO) et une teneur en H₂0₂ résiduelle inférieure à 20 ppm. Le rendement pondéral est de 90,2 %.

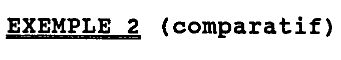

Dans cet exemple, la matière végétale n'est pas soumise à un prétraitement alcalin en présence de H₂0₂. 56 g de son de tournesol broyé (50 g sec), de qualité identique à l'exemple 1, sont mis en suspension dans 250 cm³ d'eau chauffée à 80°C, pour atteindre une consistance de 14 %. On ajoute 7 % de H₂0₂ et 2 % de NaOH. Après une heure d'agitation à 85°C, le pH est de 7,5. On filtre, on lave et on sèche à 70°C.

On obtient 44,5 g de son de tournesol (poids sec 44,5 g), ayant une blancheur de 49,6° ISO (blancheur initiale 32,8 ° ISO). Le rendement pondéral est de 89 %.

On constate que, pour une même quantité totale de réactif, H₂0₂, le blanchiment réalisé en une seule étape est moins efficace.

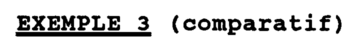

Dans cet exemple, la matière végétale est soumise à un prétraitement alcalin en l'absence de H₂0₂. 56 g de son de tournesol broyé (50 g sec), de qualité identique à l'exemple 1, sont mis en suspension dans 300 cm³ de solution aqueuse contenant 10 % de NaOH, pour obtenir un pH de 12,5. La consistance est de 15 %. Après 15 mn d'agitation à 90°C, le pH est de 10. On filtre et on lave avec 350 cm³ d'eau.

Le précipité humide est mis en suspension dans 194 cm³ d'eau pour atteindre une consistance de 15 % et est chauffé à 80°C. On ajoute 7 % de H₂0₂ et 3,4 % de NaOH pour avoir un pH initial de 11. Après 1 h d'agitation à 85 %C, le pH est de 10,4. On lave jusqu'à neutralité et on sèche.

On obtient 36 g de son de tournesol sec , ayant une blancheur de 45,4° ISO (blancheur initiale 32,8 ° ISO). Le rendement pondéral est de 72 %.

On constate que le prétraitement alcalin, en l'absence de H₂0₂, est moins efficace pour une même quantité totale de H₂0₂.

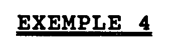

### 1) Prétraitement alcalin en présence de H₂0₂

Dans un réacteur en acier inoxydable de 100 l, on charge 80 l d'eau à 80°C, 14 kg de son de tournesol broyé (12,3 kg sec), 1,25 kg d'une solution aqueuse à 10 % de NaOH et 0,714 kg d'une solution aqueuse à 35 % de H₂0₂. La consistance du mélange est de 13 %.

On agite à grande vitesse pendant 15 mn à 80°C. Le pH du mélange à la fin du prétraitement est de 7,8.

### 2) Filtration - Lavage

On filtre sur un filtre agité constitué par une toile en acier inoxydable de maille de 200»m et de 0,24 m² de surface utile. On lave, avec agitation, avec 200 l d'eau avec une efficacité de 90 % environ.

### 3) Blanchiment en solution alcaline

Le précipité est réempâté dans le réacteur de 100 l avec de l'eau à 80°C à la consistance de 15 %. On ajoute alors 1,22 kg d'une solution aqueuse à 10 % de NaOH et 1,74 kg d'une solution aqueuse à 35 % de H₂0₂. On agite pendant 1 h à 80°C. Le pH, à la fin du blanchiment, est de 6,95.

### 4) Isolement ou séparation du son de tournesol blanchi

On filtre sur un filtre agité, constitué d'une toile en acier inoxydable de maille de 200»m et de 0,24 M² de surface utile.

On lave avec un peu d'eau pour avoir un filtrat de 80 l dont le pH est égal à 7 et qui contient 0,31 kg de H₂0₂ pur soit 0,88 kg d'H₂0₂ à 35 %.

Ce filtrat peut être utilisé sans autre traitement, pour le prétraitement (étape 1 du procédé selon l'invention) sans qu'il soit nécessaire d'ajouter du peroxyde d'hydrogène.

On lave encore le précipité avec 500 l d'eau , puis on sèche à 70°C.

On obtient 12,05 kg de son de tournesol blanchi (poids sec : 11,26 kg), ayant un pH de 6,9 et une teneur en H₂0₂ résiduel inférieure à 10 ppm, avec un rendement pondéral de 91,5 %.

La blancheur du produit traité est de 52,4° ISO. Avant traitement, la blancheur de la matière végétale était de 32,2° ISO.

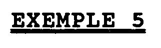

On opère comme à l'exemple 4, avec la différence que la température des étapes (1) et (3) est de 90°C au lieu de 80°C.

Le rendement pondéral est alors de 86,5 %, le pH de 6,8 et la blancheur est de 53,5° ISO.

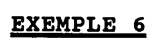

57,5 g de fibre de soja, après extraction de l'huile, d'un poids sec de 50 g, sont mis en suspension dans 300 cm³ d'eau chauffée à 90°C et contenant 2 % de H₂0₂ et 1 % de NaOH. La consistance de la suspension est de 12 %.

Après 15 mn d'agitation à 90°C, le pH de la suspension est égal à 8,2.

On filtre et on lave avec 500 cm³ d'eau à 60°C avec une efficacité de 95 % environ.

Le précipité humide d'un poids de 182 g est mis en suspension dans 220 g d'eau à 80°C contenant 10 % de H₂0₂ et 1 % de NaOH pour avoir une consistance de 10 %.

On agite à 85°C pendant 30 mn. Le pH de la suspension est alors égal à 7,7. On filtre et on lave avec 300 cm³ d'eau puis on sèche à 70°C.

On obtient 36,6 g de fibre de soja blanchie sèche ayant une blancheur de 40,2° ISO. Avant traitement, la blancheur de la fibre était de 29° ISO.

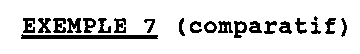

Dans cet exemple, le blanchiment a lieu en une seule étape.

57,5 g de fibre de soja, identique à celle utilisée à l'exemple 6, d'un poids net de 50 g, sont mis en suspension dans 300 cm³ d'eau chauffée à 80°C et contenant 12 % de H₂0₂ et 2 % de NaOH. La consistance est de 12 %.

On agite à 85°C, pendant 30 mn. Le pH de la suspension, à la fin du traitement est de 8,1.

On filtre et on lave avec 300 cm³ d'eau, puis on sèche à 70°C.

On obtient 39,5 g de fibre de soja blanchie sèche ayant une blancheur de 33,2° ISO.

On constate que, pour une même quantité totale de réactif, l'H₂0₂, le blanchiment est plus efficace en 2 étapes qu'en une seule.

## Revendications

1. Procédé pour le blanchiment de matière végétale comprenant un prétraitement alcalin de la dite matière et le traitement par une solution alcaline de peroxyde d'hydrogène, caractérisé en ce que :
**(1)** on traite la matière végétale par une solution alcaline contenant du peroxyde d'hydrogène, utilisé en une quantité comprise entre 0,1 et 5 % en poids par rapport au poids de la matière végétale à l'état sec, l'agent alcalin étant utilisé en quantité suffisante pour que le pH de la suspension obtenue en fin de traitement soit inférieur ou égal à 9,
**(2)** on filtre et on lave avec de l'eau la suspension obtenue à l'étape (1) avec une efficacité au moins égale à 50 % ; la matière végétale obtenue est mise en suspension dans l'eau jusqu'à l'obtention d'une consistance de 2 à 40 %,
**(3)** on traite à une température comprise entre 40 et 100°C pendant une durée de 15 mn à 5 heures, la matière obtenue à l'étape (2) par une solution alcaline de peroxyde d'hydrogène utilisé en une quantité de 1 à 15 % en poids par rapport au poids de la matière végétale à l'état sec, l'agent alcalin étant utilisé en quantité suffisante pour que le pH de la suspension obtenue à la fin de cette étape, soit inférieur ou égal à 8,5,
**(4)** on filtre et on lave avec de l'eau la matière blanchie obtenue à l'étape (3).

2. Procédé conforme à la revendication 1, caractérisé en ce que la température de traitement de l'étape (1) est comprise entre 20°C et 100°C.

3. Procédé conforme à l'une des revendications 1 et 2, caractérisé en ce que la quantité de peroxyde d'hydrogène utilisée à l'étape (1) est comprise entre 1 % et 3 %, en poids par rapport au poids sec de la matière végétale à traiter.

4. Procédé conforme à l'une des revendications 1 à 3, caractérisé en ce que l'agent alcalin, à l'étape (1), est la soude et est utilisé en quantité inférieure à 10 %, et et de préférence inférieure à 3 % en poids par rapport au poids sec de la matière végétale à traiter.

5. Procédé conforme à l'une des revendications 1 à 4, caractérisé en ce que à l'étape (1), la consistance de la suspension est comprise entre 2 et 40 % et de préférence, entre 10 et 15 %.

6. Procédé conforme à l'une des revendications 1 à 2, caractérisé en ce que la quantité de peroxyde d'hydrogène utilisée à l'étape (3) de blanchiment est comprise entre 5 et 10 % en poids par rapport au poids sec de la matière végétale à traiter.

7. Procédé conforme à l'une des revendications 1, 2 et 6, caractérisé en ce que l'agent alcalin, à l'étape (3), est la soude et est utilisé en quantité comprise entre 0,2 et 5 % en poids et, de préférence entre 1 et 2 %, par rapport au poids sec de la matière végétale à traiter.

8. Procédé conforme à l'une des revendications 1, 2, 6 et 7, caractérisé en ce que la consistance de la suspension à l'étape (3) est comprise entre 10 et 20 %.

9. Procédé conforme à l'une des revendications 1 à 8, caractérisé en ce que les solutions alcalines contenant du peroxyde d'hydrogène utilisées aux étapes (1) et (3) comprennent en outre, au moins un agent stabilisant du peroxyde d'hydrogène et/ou au moins un agent complexant ou séquestrant des ions métalliques.

10. Procédé conforme à l'une des revendications 1 à 9, caractérisé en ce que la matière végétale blanchie est traitée par une enzyme capable de décomposer le peroxyde d'hydrogène pendant ou après l'étape de lavage (d).

11. Procédé conforme à la revendication 10, caractérisé en ce que l'enzyme est la catalase.

12. Procédé conforme à l'une des revendications 1 à 11, caractérisé en ce que la matière végétale blanchie obtenue à l'étape (d), traitée éventuellement par une enzyme, est séchée et, éventuellement broyée.

13. Procédé conforme à la revendication 1, caractérisé en ce que les jus de filtration et de lavage résultant de l'étape (4) sont recyclés, comme source de peroxyde d'hydrogène à l'étape (1).

## Claims

1. Process for bleaching plant material, comprising an alkaline pretreatment of the said material, and treatment with an alkaline hydrogen peroxide solution, characterised in that:
(1) the plant material is treated with an alkaline solution containing hydrogen peroxide, used in an amount of between 0.1 and 5 % by weight relative to the weight of the plant material in the dry state, the alkaline agent being used in a sufficient amount for the pH of the suspension obtained at the end of the treatment to be not more than 9,
(2) the suspension obtained in step (1) is filtered and washed with water, with in effectiveness of it least 50 %; the plant material obtained is suspended in water until a consistency of 2 to 40 % is obtained,
(3) the material obtained in step (2) is treated at a temperature of between 40 and 100°C for a period of 15 min to 5 hours with an alkaline hydrogen peroxide solution used in an amount of 1 to 15 % by weight relative to the weight of the plant material in the dry state, the alkaline agent being used in a sufficient amount for the pH of the suspension obtained at the end of this step to be not more than 8.5,
(4) the bleached material obtained in step (3) is filtered and washed with water.

2. Process according to Claim 1, characterised in that the temperature of the treatment in step (1) between 20°C and 100°C.

3. Process according to one of Claims 1 and 2, characterised in that the amount of hydrogen peroxide used in step (1) is between 1 % and 3 %, by weight relative to the dry weight of the plant material to be treated.

4. Process according to one of Claims 1 to 3, characterised in that the alkaline agent in step (1) is sodium hydroxide which in used in amounts of less than 10 %, preferably less than 3 %, by weight relative to the dry weight of the plant material to be treated.

5. Process according to one of Claims 1 to 4, characterised in that the consistency of the suspension in step (1) is between 2 and 40 %, preferably between 10 and 15 %.

6. Process according to one of Claims 1 to 2, characterised in that the amount of hydrogen peroxide used in bleaching step (3) is between 5 and 10 % by weight relative to the dry weight of the plant material to be treated.

7. Process according to one of Claims 1, 2 and 6, characterised in that the alkaline agent in step (3) is sodium hydroxide which is used in an amount of between 0.2 and 5 % by weight, preferably between 1 and 2 %, relative to the dry weight of the plant material to be treated.

8. Process according to one of Claims 1, 2, 6 and 7, characterised in that the consistency of the suspension in step (3) is between 10 and 20 %.

9. Process according to one of Claims 1 to 8, characterised in that the alkaline solutions containing hydrogen peroxide used in stops (1) and (3) furthermore contain at least one hydrogen peroxide stabilising agent and/or at least one complexing or sequestering agent for metal ions.

10. Process according to one of Claims 1 to 9, characterised in that the bleached plant material is treated with an enzyme capable of decomposing hydrogen peroxide during or after the washing step (4).

11. Process according to Claim 10, characterised in that the enzyme is catalase.

12. Process according to one of Claims 1 to 11, characterised in that the bleached plant material obtained in stop (4), which has optionally bean treated with an enzyme, is dried and, if appropriate, crushed.

13. Process according to Claim 1, characterised in that the filtrates and the washing liquors resulting from step (4) are recycled into step (1) as a hydrogen peroxide source.

## Patentansprüche

1. Verfahren zum Bleichen pflanzlicher Materialien, das eine alkalische Vorbehandlung dieser Materialien und die Behandlung mit einer alkalischen Wasserstoffperoxidlösung umfaßt, gekennzeichnet durch folgende Schritte:
(1) Behandeln des pflanzlichen Materials mit einer alkalischen Lösung, die Wasserstoffperoxid enthält, das in einer Menge von 0,1 bis 5 Gew.-%, bezogen auf das Gewicht des pflanzlichen Materials im trockenen Zustand, verwendet wird, wobei das alkalische Mittel in einer Menge eingesetzt wird, die ausreicht, daß der pH-Wert der am Ende der Behandlung erhaltenen Suspension kleiner als oder gleich 9 ist,
(2) Filtrieren und Waschen der in Schritt (1) erhaltenen Suspension mit Wasser mit einer Wirksamkeit von mindestens 50 %, wonach das pflanzliche Material in eine Suspension in Wasser bis zum Erhalt einer Konsistenz von 2 bis 40 % übergeführt wird,
(3) Behandeln des in Schritt (2) erhaltenen pflanzlichen Materials bei einer Temperatur von 40 bis 100 °C während einer Dauer von 15 min bis 5 h mit einer alkalischen Lösung, die Wasserstoffperoxid enthält, das in einer Menge von 5 bis 15 Gew.-%, bezogen auf das Gewicht des pflanzlichen Materials im trockenen Zustand, verwendet wird, wobei das alkalische Mittel in einer Menge verwendet wird, die ausreicht, daß der pH-Wert der am Ende dieses Schritts erhaltenen Suspension kleiner als oder gleich 8,5 ist,
(4) Filtrieren und Waschen des in Schritt (3) erhaltenen gebleichten Materials mit Wasser.

2. Verfahren nach Anspruch 1, dadurch gekennzeichnet, daß die Temperatur bei der Behandlung in Schritt (1) 20 bis 100 °C beträgt.

3. Verfahren nach einem der Ansprüche 1 und 2, dadurch gekennzeichnet, daß die in Schritt (1) verwendete Menge an Wasserstoffperoxid 1 bis 3 Gew.-%, bezogen auf das Trockengewicht des zu behandelnden pflanzlichen Materials, beträgt.

4. Verfahren nach einem der Ansprüche 1 bis 3, dadurch gekennzeichnet, daß das in Schritt (1) verwendete alkalische Mittel Natriumhydroxid ist und in einer Menge kleiner als 10 Gew.-%, vorzugsweise kleiner als 3 Gew.-%, bezogen auf das Trockengewicht des zu behandelnden pflanzlichen Materials, verwendet wird.

5. Verfahren nach einem der Ansprüche 1 bis 4, dadurch gekennzeichnet, daß in Schritt (1) die Konsistenz der Suspension 2 bis 40 %, vorzugsweise 10 bis 15 %, beträgt.

6. Verfahren nach einem der Ansprüche 1 und 2, dadurch gekennzeichnet, daß die in Bleichschritt (3) verwendete Menge an Wasserstoffperoxid 5 bis 10 Gew.-%, bezogen auf das Trockengewicht des zu behandelnden pflanzlichen Materials, beträgt.

7. Verfahren nach einem der Ansprüche 1, 2 und 6, dadurch gekennzeichnet,daß das alkalische Mittel in Schritt (3) Natriumhydroxid ist und in einer Menge von 0,2 bis 5 Gew.-%, vorzugsweise 1 bis 2 Gew.-%, bezogen auf das Trockengewicht des zu behandelnden pflanzlichen Materials, verwendet wird.

8. Verfahren nach einem der Ansprüche 1, 2, 6 und 7, dadurch gekennzeichnet, daß die Konsistenz der Suspension in Schritt (3) 10 bis 20 % beträgt.

9. Verfahren nach einem der Ansprüche 1 bis 8, dadurch gekennzeichnet, daß die in den Schritten (1) und (3) verwendeten alkalischen Lösungen, die Wasserstoffperoxid enthalten, außerdem mindestens ein Stabilisierungsmittel für Wasserstoffperoxid und/oder mindestens ein Mittel zur Komplexierung oder Maskierung von Metallionen enthalten.

10. Verfahren nach einem der Ansprüche 1 bis 9, dadurch gekennzeichnet, daß das gebleichte pflanzliche Material während oder nach dem Waschschritt (4) mit einem Enzym behandelt wird, das das Wasserstoffperoxid zu zersetzen vermag.

11. Verfahren nach Anspruch 10, dadurch gekennzeichnet, daß das Enzym Katalase ist.

12. Verfahren nach einem der Ansprüche 1 bis 11, dadurch gekennzeichnet, daß das in Schritt (4) erhaltene, gegebenenfalls mit einem Enzym behandelte, gebleichte pflanzliche Material getrocknet und gegebenenfalls zerkleinert wird.

13. Verfahren nach Anspruch 1, dadurch gekennzeichnet, daß die Filtrate und Waschflüssigkeiten aus Schritt (4) als Quelle für Wasserstoffperoxid in Schritt (1) rückgeführt werden.
